# EUROPÄISCHE PATENTSCHRIFT

(11) **EP 3 658 399 B1**
(45) Veröffentlichungstag und Bekanntmachung des Hinweises auf die Patenterteilung: **02.06.2021**
(21) Anmeldenummer: 18740792.9
(22) Anmeldetag: 11.07.2018
(51) Int. Cl.: B60K 15/03, B60K 15/035

(54) **BETRIEBSFLÜSSIGKEITSBEHÄLTER MIT AUSGLEICHSBEHÄLTER ZUM AUSGLEICHEN VON DRUCKSCHWANKUNGEN IM BETRIEBSFLÜSSIGKEITSBEHÄLTER**
OPERATING LIQUID TANK HAVING COMPENSATING TANK FOR COMPENSATING FOR PRESSURE FLUCTUATIONS IN THE OPERATING LIQUID TANK
RÉSERVOIR DE LIQUIDE DE FONCTIONNEMENT POURVU D'UN RÉSERVOIR DE COMPENSATION DESTINÉ À COMPENSER DES VARIATIONS DE PRESSION DANS LE RÉSERVOIR DE LIQUIDE DE FONCTIONNEMENT

(30) Priorität: 26.07.2017 DE 102017116881
(43) Veröffentlichungstag der Anmeldung: 03.06.2020
(73) Patentinhaber: Kautex Textron GmbH & Co. KG, 53229 Bonn (DE)
(72) Erfinder: BOUFFIER, Roman, 53639 Königswinter (DE); WEISS, Gernot, 53819 Neunkirchen-Seelscheid (DE)
(74) Vertreter: Richly & Ritschel Patentanwälte PartG mbB
(86) Internationale Anmeldenummer: PCT/EP2018/068842
(87) Internationale Veröffentlichungsnummer: WO 2019/020381

(56) Entgegenhaltungen:
- CA-A1- 2 301 030
- DE-A1- 3 901 978
- US-A- 3 477 611
- US-A- 5 979 481
- US-A1- 2004 071 904

## Beschreibung

Die vorliegende Erfindung betrifft einen Betriebsflüssigkeitsbehälter mit einer in einem Betriebsflüssigkeitsbehälterinnenraum angeordneten Ausgleichsbehälter zum Ausgleichen von Druckschwankungen innerhalb des Betriebsflüssigkeitsbehälterinnenraums, wobei der Ausgleichsbehälter zumindest mittelbar mit der Atmosphäre bzw. der Umgebung fluidverbunden ist.

Im Folgenden wird auf als Kraftstoffbehälter bzw. als Kraftstofftanks ausgebildete Betriebsflüssigkeitsbehälter Bezug genommen. Betriebsflüssigkeitsbehälter im Sinne der Erfindung sind insbesondere aber nicht ausschließlich Kraftstoffbehälter (für Ottokraftstoff oder Dieselkraftstoff) für Kraftfahrzeuge, Harnstoffbehälter, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin ist es auch möglich, entsprechende Betriebsflüssigkeitsbehälter durch Rotationssintern zu fertigen. Auch aus Metall gebildete Betriebsflüssigkeitsbehälter können verwendet werden.

Bei Kraftfahrzeugen mit einer Brennkraftmaschine wird bei einer Wärmebeaufschlagung eines Kraftstoffbehälters der Kraftstoff ebenfalls erwärmt, sodass der Dampfdruck des Kraftstoffs ansteigt und der Kraftstoffbehälter mit einem entsprechenden Innendruck beaufschlagt wird. Der Druckanstieg innerhalb des Kraftstoffbehälters würde so lange andauern, bis sich der Partialdruck des Kraftstoffes im Inneren des Kraftstoffbehälters dem Dampfdruck des Kraftstoffes bei der entsprechenden Temperatur angeglichen hat. Dabei ist bei hohen Umgebungstemperaturen der Partialdruck und der sich somit einstellende Innendruck des Kraftstoffbehälters größer als bei niedrigen Umgebungstemperaturen. Durch eine entsprechende Innendruckbeaufschlagung unterliegt der Kraftstoffbehälter einer Deformation.

Zum Entlüften eines Kraftstoffbehälters weist dieser zumindest ein Entlüftungsventil auf, das wiederum mit einer Entlüftungsleitung zum Ableiten des Überdrucks an die Atmosphäre fluidverbunden ist. Insbesondere bei einem für Ottokraftstoff ausgebildeten Kraftstoffbehälter ist dessen Entlüftungsleitung mit einem Aktivkohlefilter zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können. Aufgrund des Spülvorgangs mit Ansaugluft kann die Aufnahmekapazität des Aktivkohlefilters begrenzt werden.

Kraftfahrzeuge, die über einen Hybridantrieb verfügen, die also sowohl über einen Verbrennungsmotor als auch über einen Elektromotor zum Antreiben des Kraftfahrzeugs verfügen, benötigen einen Kraftstoffbehälter, der erhöhten Innendrücken standhalten kann. Bei solchen Hybrid-Kraftfahrzeugen wird aufgrund der verminderten Betriebszeit der Brennkraftmaschine ein mit dem Kraftstoffbehälter fluidverbundenes Aktivkohlefilter entsprechend weniger gespült, da in der elektrischen Betriebsphase des Kraftfahrzeugs das Aktivkohlefilter nicht gespült werden kann. Daher soll in elektrischen Betriebsphasen des Kraftfahrzeugs das Aktivkohlefilter nicht mit Kohlenwasserstoffen beladen werden, so dass ein Gasaustausch während der elektrischen Betriebsphase unterbunden werden soll, so dass es vorteilhaft wäre, den Kraftstoffbehälter steifer und/oder druckfester auszuführen.

Aus dem Stand der Technik ist es bekannt, den Kraftstoffbehälter durch Umwicklungen und/oder Versteifungselemente innerhalb des Kraftstoffbehälters zu versteifen.

Umwickelte Kraftstoffbehälter sind jedoch in Ihrer Herstellung aufwendig und somit kostenintensiv. Außerdem schränkt eine wirkungsvoll umwickelbare Geometrie den Gestaltungsfreiraum beim Design und damit das nutzbare Volumen ein.

Versteifungselemente innerhalb eines Kraftstoffbehälters werden mittlerweile erfolgreich eingesetzt, sodass entsprechend ausgebildete Kraftstoffbehälter erhöhten Innendrücken und auch erhöhten Unterdrücken standhalten, jedoch bewirken im Kraftstoffbehälter angeordnete und mit den Kraftstoffbehälterwänden verbundene Versteifungselemente eine Verminderung des nutzbaren Volumens des Kraftstoffbehälters.

Die WO 2016/012284 A1 beschreibt einen Kraftstoffbehälter, in dessen Kraftstoffbehälterinnenraum ein Volumenveränderungselement angeordnet ist, das über eine optionale Adsorptionseinrichtung zur Adsorption von gasförmigen Kraftstoffbestandteilen mit der Atmosphäre fluidverbunden ist. Das Volumenveränderungselement ist elastisch ausgebildet, so dass sich bei Überdruck im Kraftstoffbehälterinnenraum gegenüber der Atmosphäre ein Ausgleichvolumen des Volumenveränderungselements verkleinert, wohingegen sich bei Unterdruck im Kraftstoffbehälterinnenraum gegenüber der Atmosphäre das Ausgleichvolumen vergrößert.

Bei dem aus der WO 2016/012284 A1 bekannten Kraftstoffbehälter besteht das Problem, dass das Volumenveränderungselement im expandierten Zustand mit Einbauteilen des Kraftstoffbehälters in Kontakt kommen kann, so dass sowohl das Volumenveränderungselement als auch die mit diesem in Kontakt kommenden Einbauteile des Kraftstoffbehälters beschädigt werden können. Ferner wird aufgrund der elastischen Ausgestaltung des Volumenveränderungselements der Kraftstoffbehälterinnenraum aufgrund der unkontrollierten Ausdehnungs- und Komprimierungsbewegung des Volumenveränderungselements nicht optimal genutzt, so dass der Kraftstoffbehälter und das Volumenveränderungselement relativ groß ausgebildet sein müssen. Weiterhin besteht aufgrund der elastischen Ausbildung des Volumenveränderungselements das Problem, dass die Wandung des Volumenveränderungselements eine verminderte Barriereeigenschaft aufweist, so dass weiterhin relativ große Menge von Kohlenwasserstoffen durch die Wandung des Volumenveränderungselements in dessen Ausgleichsvolumen diffundieren kann.

Die DE 39 01 978 A1 offenbart einen Betriebsflüssigkeitsbehälter für ein Kraftfahrzeug zur Aufnahme einer Betriebsflüssigkeit.

Der Betriebsflüssigkeitsbehälter weist einen mit der Atmosphäre fluidverbundenen Ausgleichsbehälter auf.

Der vorliegenden Erfindung liegt die Aufgabe zugrunde, einen verbesserten Betriebsflüssigkeitsbehälter bereitzustellen, der eine längere Langzeitstabilität aufweist, der eine verbesserte Raumausnutzung aufweist, und der verbesserte Barriereeigenschaften für gasförmige Betriebsflüssigkeitsbestandteile aufweist.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den abhängigen Ansprüchen beschrieben.

Im Genaueren wird die der vorliegenden Erfindung zugrundeliegende Aufgabe durch ein Betriebsflüssigkeitsbehälter für ein Kraftfahrzeug zur Aufnahme einer Betriebsflüssigkeit gelöst, der einen mit der Atmosphäre zumindest mittelbar fluidverbundenen Ausgleichsbehälter aufweist, wobei der Ausgleichsbehälter innerhalb des Betriebsflüssigkeitsbehälters derart angeordnet ist, dass eine Außenfläche einer Ausgleichsbehälteroberschale einer Innenfläche einer Betriebsflüssigkeitsbehälteroberschale gegenüberliegend angeordnet ist, wobei sich bei Überdruck im Betriebsflüssigkeitsbehälter gegenüber der Atmosphäre ein Ausgleichsbehältervolumen verkleinert, und wobei sich bei Unterdruck im Betriebsflüssigkeitsbehälter gegenüber der Atmosphäre das Ausgleichsbehältervolumen vergrößert. Der erfindungsgemäße Betriebsflüssigkeitsbehälter ist dadurch gekennzeichnet, dass die der Betriebsflüssigkeitsbehälteroberschale gegenüberliegende Ausgleichsbehälteroberschale zumindest abschnittsweise komplementär zur Betriebsflüssigkeitsbehälteroberschale geformt ist.

Der erfindungsgemäße Betriebsflüssigkeitsbehälter weist den Vorteil auf, dass der zur Verfügung stehende Betriebsflüssigkeitsbehälterinnenraum verbessert nutzbar ist, denn aufgrund der zumindest teilweise komplementären Ausgestaltung der Ausgleichsbehälteroberschale zur Betriebsflüssigkeitsbehälteroberschale schmiegt sich der Ausgleichbehälter dem Betriebsflüssigkeitsbehälter an. Darüber hinaus weist der erfindungsgemäße Betriebsflüssigkeitsbehälter den Vorteil auf, dass in dem Betriebsflüssigkeitsbehälter angeordnete Einbauteile, so wie beispielsweise Ventile, Leitungen, Nippel oder dergleichen bei einer Expansion und bei einer Kontraktion des Ausgleichsbehälters kleineren oder sogar gar keinen Kräften durch den Ausgleichsbehälter ausgesetzt sind. Denn die Ausgleichbehälteroberschale behält ihre Form unabhängig davon, ob sich der Ausgleichsbehälter in einem expandierten oder in einem komprimierten Zustand befindet, im Wesentlichen bei.

Der Ausgleichsbehälter ist im Betriebsflüssigkeitsbehälterinnenraum des Betriebsflüssigkeitsbehälters angeordnet. Folglich ist eine Betriebsflüssigkeit in den Betriebsflüssigkeitsbehälterinnenraum einfüllbar.

Die Fluidverbindung des Ausgleichsbehälters mit der Atmosphäre ist vorzugsweise mittels einer Entlüftungsleitung realisiert.

Das Material des Ausgleichsbehälters ist biegsam ausgebildet. Auch dieses Merkmal unterscheidet den Ausgleichsbehälter des erfindungsgemäßen Betriebsflüssigkeitsbehälters von dem aus der WO 2016/012284 A1 bekannten Volumenveränderungselements, das elastisch ausgebildet ist.

Da sich bei Überdruck im Betriebsflüssigkeitsbehälter gegenüber der Atmosphäre das Ausgleichsbehältervolumen verkleinert und sich bei Unterdruck im Betriebsflüssigkeitsbehälter gegenüber der Atmosphäre das Ausgleichsbehältervolumen vergrößert, weist der Ausgleichsbehälter folglich ein variables Ausgleichsbehältervolumen auf.

Die Ausgleichsbehälteroberschale ist der Wandbereich des Ausgleichsbehälters, der in Einbaulage des Betriebsflüssigkeitsbehälters die obere Wand des Ausgleichsbehälters bildet. Entsprechendes gilt für die Betriebsflüssigkeitsbehälteroberschale.

Das Merkmal, gemäß dem die der Betriebsflüssigkeitsbehälteroberschale gegenüberliegende Ausgleichsbehälteroberschale komplementär zur Betriebsflüssigkeitsbehälteroberschale geformt ist, kann auch so ausgedrückt werden, dass die Ausgleichsbehälteroberschale eine Topologie aufweist, die einem Negativ einer Topologie einer Betriebsflüssigkeitsbehälteroberschale entspricht. Unter der Topologie der Betriebsflüssigkeitsbehälteroberschale sind dabei die räumlichen Lagebeziehungen der Innenfläche der Betriebsflüssigkeitsbehälteroberschale zueinander zu verstehen. Unter der Topologie der Ausgleichbehälteroberschale sind die räumlichen Lagebeziehungen der Außenfläche der Ausgleichsbehälteroberschale zueinander zu verstehen.

Auch lässt sich das Merkmal, gemäß dem die der Betriebsflüssigkeitsbehälteroberschale gegenüberliegende Ausgleichsbehälteroberschale komplementär zur Betriebsflüssigkeitsbehälteroberschale geformt ist, dadurch ausdrücken, dass die Ausgleichsbehälteroberschale zumindest abschnittsweise in eine Kontur der Innenfläche der Betriebsflüssigkeitsbehälteroberschale eingreift.

Die Form der Ausgleichsbehälteroberschale und damit die Topologie der Außenfläche der Ausgleichsbehälteroberschale ist im Wesentlichen unabhängig von einer Druckdifferenz zwischen der Atmosphäre und dem Innendruck im Betriebsflüssigkeitsbehälter.

Die Form der Außenfläche der Ausgleichsbehälteroberschale ist vorzugsweise auch in/an der Betriebsflüssigkeitsbehälteroberschale angeordneten Einbauteilen, so wie beispielsweise Ventilen und/oder Leitungen und dergleichen angepasst.

Die Ausgleichsbehälteroberschale und/oder die Ausgleichsbehälterunterschale kann/können in Ihrer Form derart angepasst sein, dass Einbauteile, die beispielsweise an der Betriebsflüssigkeitsbehälteroberschale und/oder an der Betriebsflüssigkeitsbehälterunterschale angebracht sind, von der Ausgleichsbehälteroberschale und/oder die Ausgleichsbehälterunterschale ausgespart sind.

Die Ausgleichbehälteroberschale kann auch als Ausgleichsbehälterdeckenwand bezeichnet werden.

Der Ausgleichsbehälter wird vorzugsweise durch Thermoformen eines Folienzuschnitts oder mehrerer Folienzuschnitte gebildet. Bei einer entsprechenden Herstellung lässt sich die Ausgleichbehälteroberschale präzise an der Form der Betriebsflüssigkeitsbehälteroberschale anpassen.

Der Ausgleichsbehälter, insbesondere die Ausgleichsbehälteroberschale wird weiter vorzugsweise durch ein Spritzgießverfahren hergestellt. Bei einer entsprechenden Herstellung lässt sich die Ausgleichbehälteroberschale präzise an der Form der Betriebsflüssigkeitsbehälteroberschale anpassen.

Ferner ist es auch möglich, dass der Ausgleichsbehälter durch Fügen mehrerer Folienzuschnitte zu einem dreidimensionalen Konstrukt erzeugt wird.

Weiterhin ist es auch möglich, dass der Ausgleichsbehälter durch Fügen zweier ebener Folienzuschnitte mit lokalen Verbindungspunkten erzeugt wird. Hierbei werden die beiden Folien neben einer umlaufenden Fügenaht für die Mediendichtigkeit in ausgewählten Bereichen innerhalb der umlaufenden Fügenaht verbunden, so dass im expandierten Zustand des Ausgleichsbehälters Zuganker gebildet sind, die in Verbindung mit der umlaufenden Naht zu einer definierten Kontur des Ausgleichsbehälters insbesondere im expandierten Zustand führen.

Vorzugsweise ist der Betriebsflüssigkeitsbehälter derart ausgebildet, dass die Ausgleichsbehälteroberschale in einem komprimierten Zustand des Ausgleichsbehälters zumindest abschnittsweise komplementär zur Betriebsflüssigkeitsbehälteroberschale geformt ist.

Im komprimierten Zustand ist der Druck innerhalb des Betriebsflüssigkeitsbehälters größer als der den Betriebsflüssigkeitsbehälter umgebende Atmosphärendruck. Bei dem komprimiert Zustand weist der Ausgleichsbehälter ein im Vergleich zu einem maximalen Ausgleichbehältervolumen vermindertes Ausgleichsbehältervolumen auf. Es ist auch möglich das im komprimierten Zustand des Ausgleichsbehälters das Ausgleichsbehältervolumen dessen bauartbedingten Minimalwert aufweist.

Weiter vorzugsweise ist der Betriebsflüssigkeitsbehälter derart ausgebildet, dass die Ausgleichsbehälteroberschale im expandierten Zustand des Ausgleichsbehälters zumindest abschnittsweise komplementär zur Betriebsflüssigkeitsbehälteroberschale geformt ist.

Der entsprechend ausgebildete Betriebsflüssigkeitsbehälter weist den Vorteil auf, dass trotz möglicher maximaler Ausdehnung des Ausgleichsbehälters Einbauteile bzw. Anbauteile, die insbesondere in/an der Betriebsflüssigkeitsbehälteroberschale angeordnet sind, durch den Ausgleichsbehälter nicht kraftbeaufschlagt oder vermindert kraftbeaufschlagt sind. Dadurch weist der Betriebsflüssigkeitsbehälter eine erhöhte Langzeitstabilität auf. Auch werden Beschädigungen an dem Ausgleichsbehälter vermieden.

Im expandierten Zustand ist der Druck innerhalb des Betriebsflüssigkeitsbehälters kleiner als der den Betriebsflüssigkeitsbehälter umgebende Atmosphärendruck. Im expandierten Zustand weist der Ausgleichsbehälter füllstandabhängig vorzugsweise sein bauartbedingtes maximales Aufnahmevolumen auf.

Vorzugsweise ist der Betriebsflüssigkeitsbehälter derart ausgebildet, dass die Ausgleichsbehälteroberschale und eine Ausgleichsbehälterunterschale unterschiedliche Steifigkeiten aufweisen.

Der entsprechend ausgebildete Betriebsflüssigkeitsbehälter weist den Vorteil auf, dass der Ausgleichsbehälter bei Druckveränderungen im Betriebsflüssigkeitsbehälterinnenraum eine definierte Expansions- und Kontraktionsbewegung durchführt. Denn lediglich die Schale des Ausgleichsbehälters, die die niedrigere Steifigkeit aufweist, wird bei einer Druckveränderung eine Expansions- oder Kontraktionsbewegung durchführen. Folglich verändert entweder die Ausgleichsbehälteroberschale oder vorzugsweise die Ausgleichsbehälterunterschale ihre Form bei einer Druckveränderung innerhalb des Betriebsflüssigkeitsbehälters.

Weiter vorzugsweise ist der Betriebsflüssigkeitsbehälter derart ausgebildet, dass die Ausgleichsbehälteroberschale und eine Ausgleichsbehälterunterschale unterschiedliche Biegesteifigkeiten aufweisen.

Weiter vorzugsweise ist der Betriebsflüssigkeitsbehälter derart ausgebildet, dass die Ausgleichsbehälteroberschale eine größere Steifigkeit als die Ausgleichsbehälterunterschale aufweist.

Der entsprechend ausgebildete Betriebsflüssigkeitsbehälter weist den Vorteil auf, dass bei Druckschwankungen innerhalb des Betriebsflüssigkeitsbehälters lediglich oder hauptsächlich die Ausgleichsbehälterunterschale Expansions- und Kontraktionsbewegungen durchführt. Dadurch wird ein nochmals verbesserter Schutz von Einbauteil bzw. Anbauteilen, die in/an der Betriebsflüssigkeitsbehälteroberschale angeordnet sind, bewirkt. Auch ist bei dem entsprechend ausgebildeten Betriebsflüssigkeitsbehälter dessen Betriebsflüssigkeitsbehälterinnenraum besonders effektiv nutzbar, da aufgrund der Anpassung bzw. Anschmiegung der Ausgleichsbehälteroberschale an der Betriebsflüssigkeitsbehälteroberschale der entsprechende Raum des Betriebsflüssigkeitsbehälters stets genutzt wird.

Alternativ kann der Betriebsflüssigkeitsbehälter auch so ausgestaltet sein, dass die Ausgleichsbehälteroberschale eine kleinere Steifigkeit als eine Ausgleichsbehälterunterschale aufweist.

Vorzugsweise ist der Betriebsflüssigkeitsbehälter derart ausgebildet, dass eine Dicke der Ausgleichsbehälteroberschale (21) größer als eine Dicke einer Ausgleichsbehälterunterschale (25) ist.

Der entsprechend ausgebildete Betriebsflüssigkeitsbehälter weist den Vorteil auf, dass der Ausgleichsbehälter bei einer verminderten mechanischen Belastung von etwaigen Einbauteile bzw. Anbauteilen eine verminderte Durchlässigkeit für gasförmige Betriebsflüssigkeitsbehälterbestandteile, beispielsweise Kohlenwasserstoffe, aufweist. Da die Ausgleichsbehälteroberschale dicker als die Ausgleichsbehälterunterschale ist, kann diese eine niedrigere Permeabilität für gasförmige Betriebsflüssigkeitsbestandteile aufweisen. Somit kann die Ausgleichsbehälterunterschale dünner gestaltet werden, und eine höhere Permeabilität für gasförmige Betriebsflüssigkeitsbestandteile aufweisen.

Alternativ kann der Betriebsflüssigkeitsbehälter auch so ausgestaltet sein, dass eine Dicke der Ausgleichsbehälteroberschale gleich oder kleiner als eine Dicke der Ausgleichsbehälterunterschale ist.

Vorzugsweise ist der Betriebsflüssigkeitsbehälter derart ausgebildet, dass die Ausgleichsbehälteroberschale eine Verstärkungsstruktur zur Erhöhung der Steifigkeit der Ausgleichsbehälteroberschale aufweist.

Die Verstärkungsstruktur ist vorzugsweise in Form von Verstärkungsrippen oder in Form eines Verstärkungsgitters realisiert, die/das an der Außenfläche und/oder an der Innenfläche des Ausgleichsbehälteroberschale ausgebildet ist/sind. Beschränkungen hinsichtlich der Ausgestaltung der Verstärkungsstruktur bestehen keine.

Vorzugsweise ist der Betriebsflüssigkeitsbehälter derart ausgebildet, dass der Ausgleichsbehälter lösbar im Betriebsflüssigkeitsbehälterinnenraum befestigt ist.

Der entsprechend ausgebildete Betriebsflüssigkeitsbehälter weist den Vorteil auf, dass bei Beschädigung des Ausgleichsbehälters dieser einfach durch einen neuen Ausgleichsbehälter austauschbar ist. Vorzugsweise erfolgt die lösbare Befestigung des Ausgleichsbehälters mittels eines Klettverschlusses.

Vorzugsweise ist der Betriebsflüssigkeitsbehälter derart ausgebildet, dass der Ausgleichsbehälter punktuell, vorzugsweise über eine Punktschweißung und/oder teilflächig, vorzugsweise über eine teilflächige Verschweißung mit der Betriebsflüssigkeitsbehälteroberschale verbunden ist.

Durch eine entsprechende Verbindung des Ausgleichsbehälters mit dem Betriebsflüssigkeitsbehälter ist die Position des Ausgleichsbehälters innerhalb des Betriebsflüssigkeitsbehälters definiert, so dass nochmals verbessert etwaige Kollisionen während der Expansions- und/oder Kontraktionsbewegung des Ausgleichsbehälters mit Einbauteilen verbessert vermieden werden können.

Eine punktuelle und/oder eine teilflächige Verbindung weist ferner den Vorteil auf, dass die Verbindung eine Expansions- und/oder Kontraktionsbewegung des Ausgleichsbehälters nicht behindert.

Vorzugsweise ist die Ausgleichsbehälteroberschale an der Betriebsflüssigkeitsbehälteroberschale oder an einer Seitenwand des Betriebsflüssigkeitsbehälters mittels einer Punktschweißung oder einer teilflächigen Schweißung verbunden.

Erfindungsgemäß ist der Betriebsflüssigkeitsbehälter derart ausgebildet, dass die Ausgleichsbehälteroberschale und/oder die Ausgleichsbehälterunterschale eine Barriereschicht aufweist / aufweisen, die für gasförmige Bestandteile der Betriebsflüssigkeit undurchlässig ist.

Die Barriereschicht ist vorzugsweise als EVOH-Schicht ausgebildet. Weiter vorzugsweise ist Barriereschicht als Polyamid-Schicht ausgebildet. Dabei kann die Polyamid lineare Polyamide und/oder zyklische Polyamide aufweisen. Durch Bereitstellen der Barriereschicht werden nochmals weniger gasförmige Bestandteile an die Umgebung abgegeben, so dass ein zwischen dem Ausgleichsbehältervolumen und der Atmosphäre angeordnetes Adsorptionsfilter, das vorzugsweise als Aktivkohlefilter oder als sogenanntes Wabenfilter (Honeycomb) ausgebildet ist, verkleinert ausgestaltet sein kann.

Weiter erfindungsgemäß ist der Betriebsflüssigkeitsbehälter derart ausgebildet, dass die Ausgleichsbehälteroberschale und/oder die Ausgleichsbehälterunterschale mehrschichtig aufgebaut ist.

Durch einen mehrschichtigen Aufbau der Ausgleichsbehälteroberschale lassen sich üblicherweise nicht miteinander vereinbare Eigenschaften, so wie gute Barriereeigenschaften für gasförmige Betriebsflüssigkeitsbestandteile und eine gute Verformbarkeit insbesondere der Ausgleichsbehälterunterschale, miteinander kombinieren. Ein entsprechend ausgebildeter Betriebsflüssigkeitsbehälter weist daher eine gute Volumenausnutzung und eine geringe Emissionswerte auf.

Weiter vorzugsweise ist der Betriebsflüssigkeitsbehälter derart ausgebildet, dass die Ausgleichsbehälteroberschale und/oder die Ausgleichsbehälterunterschale eine Barriereschicht aufweist, die sandwichartig zwischen zwei Haftvermittlerschichten angeordnet sind, mit deren Außenseiten jeweils eine PolyethylenSchicht stoffschlüssig verbunden ist.

Vorzugsweise ist der Betriebsflüssigkeitsbehälter derart ausgebildet, dass die Ausgleichsbehälteroberschale mit der Ausgleichsbehälterunterschale mittels einer umlaufenden Verschweißung verbunden ist.

Die Herstellung eines entsprechenden Ausgleichsbehälters ist besonders einfach möglich. Ferner kann insbesondere die Form der Ausgleichsbehälteroberschale nochmals verbessert der Form der Betriebsflüssigkeitsbehälteroberschale angepasst werden.

Weiter vorzugsweise ist der Betriebsflüssigkeitsbehälter derart ausgebildet, dass dieser eine im Betriebsflüssigkeitsbehälterinnenraum angeordnete Schwappschutzwand aufweist, wobei der Ausgleichsbehälter innerhalb des Betriebsflüssigkeitsbehälterinnenraums an der Schwappschutzwand anliegend angeordnet ist.

Durch eine entsprechende Ausbildung des Betriebsflüssigkeitsbehälters ist die Positionierung der Ausgleichsbehälter nochmals verbessert gewährleistet. Auch können auf den Ausgleichsbehälter ausgebübte Kräfte, die durch die Bewegung der Betriebsflüssigkeit während des Fahrbetriebs des Kraftfahrzeugs bedingt sind, verbessert aufgenommen werden, so dass der entsprechend ausgebildete Betriebsflüssigkeitsbehälter eine verbesserte Langzeitstabilität aufweist.

Vorzugsweise ist der Betriebsflüssigkeitsbehälter derart ausgebildet, dass in Draufsicht auf den Betriebsflüssigkeitsbehälter eine Querschnittsfläche des Ausgleichsbehälters mehr als 30% einer Querschnittsfläche des Betriebsflüssigkeitsbehälters entspricht.

Weiter vorzugsweise entspricht in Draufsicht auf den Betriebsflüssigkeitsbehälter, also auf die Betriebsflüssigkeitsbehälteroberschale, die Querschnittsfläche des Ausgleichsbehälters mehr als 40% der Querschnittsfläche des Betriebsflüssigkeitsbehälters. Weiter vorzugsweise entspricht in Draufsicht auf den Betriebsflüssigkeitsbehälter die Querschnittsfläche des Ausgleichsbehälters mehr als 50% der Querschnittsfläche des Betriebsflüssigkeitsbehälters. Weiter vorzugsweise entspricht in Draufsicht auf den Betriebsflüssigkeitsbehälter die Querschnittsfläche des Ausgleichsbehälters mehr als 60% der Querschnittsfläche des Betriebsflüssigkeitsbehälters. Weiter vorzugsweise entspricht in Draufsicht auf den Betriebsflüssigkeitsbehälter die Querschnittsfläche des Ausgleichsbehälters mehr als 70% der Querschnittsfläche des Betriebsflüssigkeitsbehälters. Weiter vorzugsweise entspricht in Draufsicht auf den Betriebsflüssigkeitsbehälter die Querschnittsfläche des Ausgleichsbehälters mehr als 80% der Querschnittsfläche des Betriebsflüssigkeitsbehälters. Weiter vorzugsweise entspricht in Draufsicht auf den Betriebsflüssigkeitsbehälter die Querschnittsfläche der Querschnittsfläche des Betriebsflüssigkeitsbehälters.

Umso größer die Querschnittsfläche des Ausgleichsbehälters ist, desto kleiner muss ein Hub der Ausgleichsbehälterunterschale ausfallen, um die gewünschten Druckausgleicheigenschaften zu gewährleisten.

Weiter vorzugsweise ist der Betriebsflüssigkeitsbehälter derart ausgebildet, dass eine Ausgleichsbehälterunterschale zumindest abschnittsweise komplementär zur Ausgleichsbehälteroberschale geformt ist.

Durch eine entsprechende Ausbildung des Ausgleichsbehälters wird der zur Verfügung stehende Betriebsflüssigkeitsbehälterinnenraum nochmals verbessert ausgenutzt.

Gemäß einer weiteren vorteilhaften Ausgestaltung ist der Betriebsflüssigkeitsbehälter derart ausgebildet, dass eine Ausgleichsbehälterunterschale zumindest abschnittsweise komplementär zu einer Betriebsflüssigkeitsbehälterunterschale geformt ist.

Durch eine entsprechende Ausbildung des Betriebsflüssigkeitsbehälters werden bei einer Expansion des Ausgleichsbehälters auch weitere, nicht in der Betriebsflüssigkeitsbehälteroberschale angeordnete Einbauteile vor einer Kraftbeaufschlagung oder vor einer zu großen Kraftbeaufschlagung durch den Ausgleichsbehälter geschützt werden.

Weitere Vorteile, Einzelheiten und Merkmale der Erfindung ergeben sich nachfolgend aus den erläuterten Ausführungsbeispielen. Dabei zeigen im Einzelnen:
- Figur 1A bis 1C:: schematische Querschnittsdarstellungen eines erfindungsgemäßen als Kraftstoffbehälter ausgebildeten Betriebsflüssigkeitsbehälters mit einem integrierten Ausgleichsbehälter in unterschiedlichen Füllzuständen;
- Figur 2:: eine schematische Querschnittsdarstellung eines Betriebsflüssigkeitsbehälters gemäß einer weiteren Ausführungsform der vorliegenden Erfindung;
- Figur 3:: eine schematische Querschnittsdarstellung eines Betriebsflüssigkeitsbehälters gemäß einer nochmals weiteren Ausführungsform der vorliegenden Erfindung;
- Figur 4:: eine schematische Querschnittsdarstellung eines zweiteiligen Ausgleichsbehälters, dessen Ausgleichsbehälteroberschale mit der Ausgleichsbehälterunterschale über eine umlaufende Schweißnaht verbunden ist;
- Figur 5:: eine schematische Querschnittsdarstellung eines mehrteiligen Ausgleichsbehälters, deren Folienzuschnitte jeweils miteinander verschweißt sind; und
- Figur 6:: eine schematische Querschnittsdarstellung eines Ausgleichsbehälters, bei dem die Folienzuschnitte zusätzlich zu einer umlaufenden Fügenaht an einem lokalen Verbindungpunkt miteinander verbunden sind.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

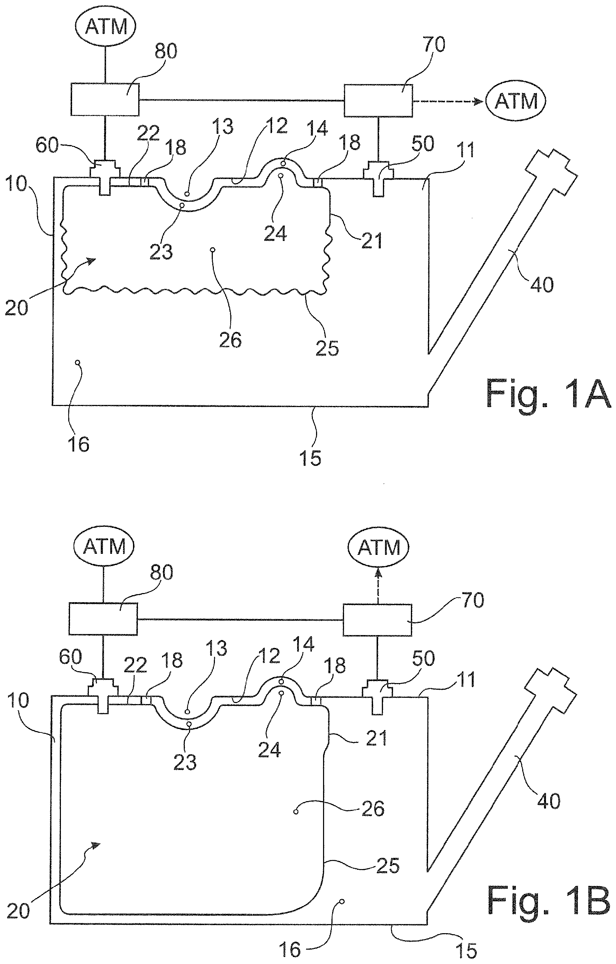

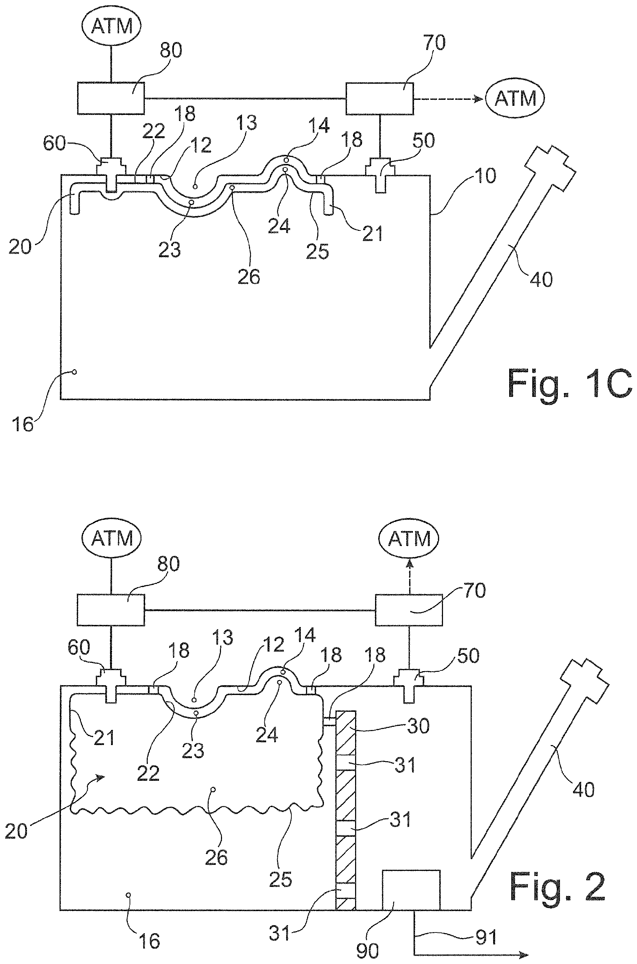

Die Figuren 1A, 1B und 1C zeigen schematische Querschnittsdarstellungen eines erfindungsgemäßen Betriebsflüssigkeitsbehälters 10 gemäß einer ersten Ausführungsform der vorliegenden Erfindung. In dem dargestellten Ausführungsbeispiel ist der Betriebsflüssigkeitsbehälter 10 als Kraftstoffbehälter 10 ausgebildet. Der Betriebsflüssigkeitsbehälter 10 weist einen mit der Atmosphäre ATM fluidverbundenen Ausgleichsbehälter 20 auf. In den dargestellten Ausführungsbeispielen ist der Ausgleichsbehälter 20 über eine Filtereinrichtung 80 mit der Atmosphäre fluidverbunden. Bei der Filtereinrichtung 80 kann es sich beispielsweise um einen Wabenfilter und/oder um einen Staubfilter handeln. Ferner ist es möglich, dass die Filtereinrichtung als Adsorptionsfilter ausgebildet ist. Insbesondere ist es möglich, dass die Filtereinrichtung 80 als Aktivkohlefilter ausgebildet ist.

Der Ausgleichsbehälter 20 weist eine Ausgleichsbehälteroberschale 21 und eine Ausgleichsbehälterunterschale 25 auf. Dabei weisen die Ausgleichsbehälteroberschale 21 und die Ausgleichsbehälterunterschale 25 unterschiedliche Steifigkeiten auf. Bei den dargestellten Ausführungsbeispielen weist die Ausgleichsbehälteroberschale 21 eine größere Steifigkeit als die Ausgleichsbehälterunterschale 25 auf.

Das Merkmal, gemäß dem die Ausgleichsbehälteroberschale 21 eine größere Steifigkeit als die Ausgleichsbehälterunterschale 25 aufweist, kann dadurch realisiert sein, dass eine Dicke, die auch als Wanddicke oder als Wandstärke bezeichnet werden kann, der Ausgleichsbehälteroberschale 21 größer als eine Dicke, die auch als Wanddicke oder als Wandstärke bezeichnet werden kann, der Ausgleichsbehälterunterschale 25 ist. Ferner ist es möglich, dass das Merkmal, gemäß dem die Ausgleichsbehälteroberschale 21 eine größere Steifigkeit als die Ausgleichsbehälterunterschale 25 aufweist, dadurch realisiert ist, dass für die Ausgleichsbehälteroberschale 21 und die Ausgleichsbehälterunterschale 25 unterschiedliche Materialien mit unterschiedlichen Materialeigenschaften verwendet werden. Ferner ist es auch möglich, dass das Merkmal, wonach die Ausgleichsbehälteroberschale 21 eine größere Steifigkeit als die Ausgleichbehälter unterscheidet 20 aufweist, dadurch realisiert ist, dass die Ausgleichsbehälteroberschale 21 mit einer in den Figuren nicht dargestellten Verstärkungsstruktur versehen ist. Bei der Verstärkungsstruktur kann es sich beispielsweise um Verstärkungsrippen oder um Verstärkungsgitter handeln, die/das an einer Außenfläche 22 und/oder einer Innenfläche der Ausgleichsbehälteroberschale 21 ausgebildet ist/sind. Beschränkungen hinsichtlich der Ausgestaltung der Verstärkungsstruktur bestehen erfindungsgemäß keine.

Aus den Figuren 1A bis 1C ist ersichtlich, dass der Ausgleichsbehälter 20 innerhalb eines Betriebsflüssigkeitsbehälterinnenraums 16 des Betriebsflüssigkeitsbehälters 10 angeordnet ist. Dabei ist die Außenfläche 22 der Ausgleichsbehälteroberschale 21 einer Innenfläche 12 einer Betriebsflüssigkeitsbehälteroberschale 11 gegenüberliegend angeordnet. Bei Überdruck im Betriebsflüssigkeitsbehälter 10 gegenüber der Atmosphäre ATM verkleinert sich dabei ein Ausgleichsbehältervolumen 26, wohingegen sich bei Unterdruck im Betriebsflüssigkeitsbehälter 10 gegenüber der Atmosphäre ATM sich das Ausgleichsbehältervolumen 26 vergrößert. In Figur 1B ist der Ausgleichsbehälter 20 in einem expandierten Zustand dargestellt, in dem das Ausgleichsbehältervolumen 26 maximal ist. Hingegen ist in Figur 1C der Ausgleichsbehälter 20 in einem komprimierten Zustand dargestellt, in dem das Ausgleichsbehältervolumen 26 minimal ist. In Figur 1A wiederum ist der Ausgleichsbehälter 20 in einem Zustand dargestellt, in dem das Ausgleichsbehältervolumen 26 einen Zwischenwert zwischen einem maximalen Ausgleichsbehältervolumen und einem minimalen Ausgleichbehältervolumen einnimmt.

Es ist ersichtlich, dass die der Betriebsflüssigkeitsbehälteroberschale 11 gegenüberliegende Ausgleichsbehälteroberschale 21 zumindest abschnittsweise komplementär zur Betriebsflüssigkeitsbehälteroberschale 11 geformt ist. So ist eine Einbuchtung 13 der Betriebsflüssigkeitsbehälteroberschale 11 in einer entsprechenden Einbuchtung 23 der Ausgleichsbehälteroberschale 21 aufgenommen. Weiterhin ist in dem dargestellten Ausführungsbeispiel eine Ausbuchtung 24 der Ausgleichsbehälteroberschale 21 in einer Ausbuchtung 14 der Betriebsflüssigkeitsbehälteroberschale 11 aufgenommen. Die Ausgleichsbehälteroberschale 21 weist folglich eine Topologie auf, die einem Negativ einer Topologie der Betriebsflüssigkeitsbehälteroberschale 11 entspricht.

Da die Steifigkeit der Betriebsflüssigkeitsbehälteroberschale 21 größer als die Steifigkeit der Betriebsflüssigkeitsbehälterunterschale 25 ist, wird die Veränderung eines Ausgleichsbehältervolumens 26 dadurch erzielt, dass sich maßgeblich die Form der Ausgleichsbehälterunterschale 25 bei einer Druckveränderung im Betriebsflüssigkeitsbehälter 10 verändert. Aus Figur 1B ist ersichtlich, dass die Ausgleichsbehälteroberschale 21 auch im expandierten Zustand des Ausgleichsbehälters 20 komplementär zur Betriebsflüssigkeitsbehälteroberschale 11 geformt ist. Aus Figur 1C wiederum ist ersichtlich, dass die Ausgleichsbehälteroberschale 21 auch im komprimierten Zustand des Ausgleichsbehälters 20 komplementär zur Betriebsflüssigkeitsbehälteroberschale 11 geformt ist.

In Figur 2 ist ein Betriebsflüssigkeitsbehälter 10 gemäß einer weiteren Ausführungsform der vorliegenden Erfindung dargestellt. Der Betriebsflüssigkeitsbehälter 10 weist eine im Betriebsflüssigkeitsbehälterinnenraum 16 angeordnete Schwappschutzwand 30 auf. Der Ausgleichsbehälter 20 ist innerhalb des Betriebsflüssigkeitsbehälterinnenraums 16 an der Schwappschutzwand 30 anliegend angeordnet.

Es ist ersichtlich, dass die Schwappschutzwand mehrere Durchgangsöffnungen 31 aufweist, durch die die Betriebsflüssigkeit hindurch treten kann. Ferner ist ersichtlich, dass in dem dargestellten Ausführungsbeispiel der Ausgleichsbehälter 20 über eine Verbindung 18 mit der Schwappschutzwand 30 verbunden ist. Dies ist jedoch nicht unbedingt notwendig.

Ferner ist ersichtlich, dass eine Flüssigkeitsfördereinrichtung 90, die vorzugsweise als Pumpe 90 ausgebildet ist, im Betriebsflüssigkeitsbehälterinnenraum 16 angeordnet ist. Die Pumpe 90 ist dabei zwischen einer Mündung eines Einfüllrohrs 40 in den Betriebsflüssigkeitsbehälterinnenraum 16 und der Schwappschutzwand 30 angeordnet. Über eine Förderleitung 91 kann Betriebsflüssigkeit aus dem Betriebsflüssigkeitsbehälter 10 an beispielsweise eine in den Figuren nicht dargestellte Verbrennungskraftmaschine gefördert werden.

Selbstverständlich weist der Betriebsflüssigkeitsbehälter 10 in der in den Figuren 1A bis 1C dargestellten Ausführungsform auch eine Flüssigkeitsfördereinrichtung 90 auf, jedoch ist diese in den Figuren 1A bis 1C nicht dargestellt.

Aus sämtlichen Figuren 1A bis 3 ist ersichtlich, dass die Befestigung des Ausgleichsbehälters 20 im Betriebsflüssigkeitsbehälter 10 über Verbindungen 18 realisiert sind. Bei diesen Verbindungen 18 handelt es sich um eine Punktschweißung und/oder eine Flächenschweißung. Weiterhin ist es auch möglich, dass der Ausgleichsbehälter 20 lösbar innerhalb des Betriebsflüssigkeitsbehälters 10 befestigt ist.

Weiterhin ist aus den Figuren 1A bis 3 ersichtlich, dass eine Entlüftung und/oder eine Belüftung des Betriebsflüssigkeitsbehälterinnenraums 60 über einen Betriebs- und/oder Betankungsentlüftungsventils 50 erfolgt. Dieses ist mit einem Adsorptionsfilter 70 wiederum fluidverbunden, dass entweder direkt mit der Atmosphäre ATM fluidverbunden ist oder über die Filtereinrichtung 80 mit der Atmosphäre ATM fluidverbunden ist. Das Adsorptionsfilter 70 und/oder die Filtereinrichtung 80 sind vorzugsweise mit einem Ansaugtrakt einer in den Figuren nicht dargestellten Brennkraftmaschine fluidverbunden.

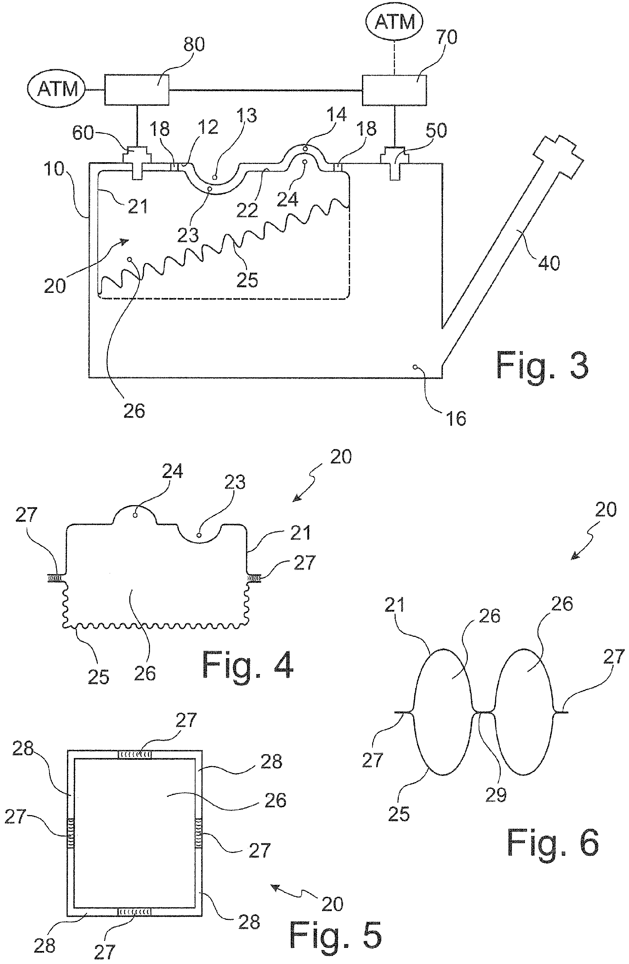

In Figur 3 ist ein Betriebsflüssigkeitsbehälter 10 gemäß einer weiteren Ausführungsform der vorliegenden Erfindung dargestellt. Bei dem dargestellten Ausführungsbeispiel ist der Ausgleichsbehälter 20 derart ausgebildet, dass die Ausgleichsbehälterunterschale 25 zumindest in einem Zwischenzustand, in dem das Ausgleichsbehältervolumen 26 einen Zwischenwert zwischen einem minimalen Ausgleichsbehältervolumen und einem maximalen Ausgleichsbehältervolumen aufweist, innerhalb der des Betriebsflüssigkeitsbehälterinnenraums 16 in Einbaulage des Betriebsflüssigkeitsbehälters 10 schräg verlaufend. Dies hat zum Vorteil, dass sich unterhalb der Ausgleichsbehälterunterschale 25 keine Lufteinschlüsse bilden, die das effektiv nutzbare Volumen des Betriebsflüssigkeitsbehälters 10 reduzieren würden. Wenn der Ausgleichsbehälter 20 expandiert ist, folglich das Ausgleichsbehältervolumen 26 maximal ist, nimmt die Ausgleichsbehälterunterschale 25 die in Figur 3 gestrichelt dargestellte Forum an.

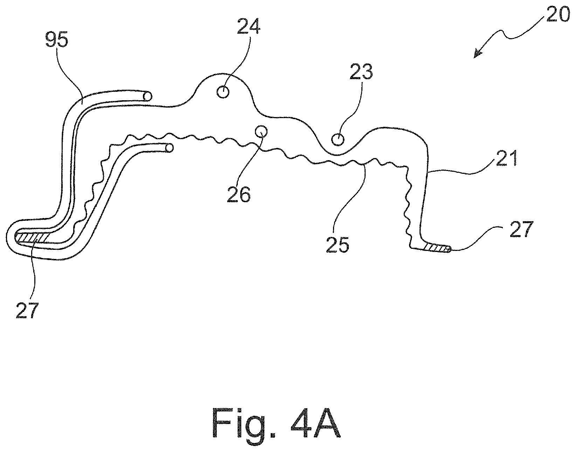

Figur 4 zeigt einen Ausgleichsbehälter 20 gemäß einer weiteren Ausführungsform in Alleinstellung. Dabei ist die Ausgleichsbehälteroberschale 21 mit der Ausgleichsbehälterunterschale 25 mittels einer umlaufenden Schweißnaht 27 verbunden. Es ist ersichtlich, dass der Ausgleichsbehälter 20 eine Ausbuchtung 24 und eine Einbuchtung 23 aufweist. Dies ist aber nicht erfindungswesentlich, solange die Ausgleichsbehälteroberschale 21 eine Form aufweist, die komplementär zu einer Form einer Betriebsflüssigkeitsbehälteroberschale 11 ist.

Figur 4A zeigt einen Ausgleichsbehälter 20 gemäß einer weiteren Ausführungsform in Alleinstellung. Der in Figur 4A dargestellte Ausgleichsbehälter 20 basiert auf dem in Figur 4 dargestellten Ausgleichsbehälter, wobei der in Figur 4A dargestellte Ausgleichsbehälter 20 in einem im Vergleich zu Figur 4 komprimierteren Zustand dargestellt ist, in dem die Ausgleichsbehälterunterschale 25 sich an die Ausgleichsbehälteroberschale 21 anschmiegt, so dass das Ausgleichsbehältervolumen 26 im Vergleich zum in Figur 4 dargestellten Zustand reduziert ist. Der in Figur 4A dargestellte Ausgleichsbehälter 20 weist zusätzlich zu dem in Figur 4 gezeigten Ausgleichsbehälter 20 eine flexible oder biegsame Belüftungsröhre 95 auf, die an der Außenfläche 22 der Ausgleichsbehälteroberschale 21 und an eine Außenfläche der Ausgleichsbehälterunterschale 25 befestigt ist, wobei die beiden Enden der Belüftungsröhre 95 miteinander in Fluidkommunikation stehen. Folglich wird insbesondere bei einem komprimierten Ausgleichsbehälter 20 ein Einschluss einer Luftblase / Gasblase unterhalb der Ausgleichsbehälterunterschale 25 verhindert, da Luft bzw. Gas mittels der der Belüftungsröhre 95 aus dem Bereich unterhalb der Ausgleichsbehälterunterschale 25 in den Bereich oberhalb der Ausgleichsbehälteroberschale 21 abgeleitet werden kann, so dass auch das Volumen unterhalb der Ausgleichsbehälterunterschale 25 von der Betriebsflüssigkeit eingenommen werden kann.

Aus Figur 5 ist ersichtlich, dass ein Ausgleichsbehälter 20 auch über mehrere Folienzuschnitte 28 zusammengesetzt sein kann. Diese Folienzuschnitte 28 sind über Schweißnähte 27 miteinander verbunden. Durch eine entsprechende Ausgestaltung des Ausgleichsbehälters 20 kann dieser besonders einfach einer Geometrie eines Betriebsflüssigkeitsbehälters 10 angepasst werden.

Aus Figur 6 ist ein Ausgleichsbehälter 20 gemäß einer weiteren Ausführungsform in Alleinstellung dargestellt. Bei dem in Figur 6 dargestellten Ausgleichsbehälter 20 ist zusätzlich zu einer umlaufenden Schweißnaht 27 die Ausgleichsbehälteroberschale 21 mit der Ausgleichsbehälterunterschale 25 über einen Verbindungspunkt 29 miteinander verbunden. So sind in einem expandierten Zustand des Ausgleichsbehälters 20 Zuganker gebildet, die in Verbindung mit der umlaufenden Naht 27 zu einer definierten Kontur des Ausgleichsbehälters 20 insbesondere im expandierten Zustand führen.

### Bezugszeichenliste

- 10: Betriebsflüssigkeitsbehälter
- 11: Betriebsflüssigkeitsbehälteroberschale
- 12: Innenfläche (der Betriebsflüssigkeitsbehälteroberschale)
- 13: Einbuchtung (der Betriebsflüssigkeitsbehälteroberschale)
- 14: Ausbuchtung (der Betriebsflüssigkeitsbehälteroberschale)
- 15: Betriebsflüssigkeitsbehälterunterschale
- 16: Betriebsflüssigkeitsbehälterinnenraum
- 18: Verbindung / Punktschweißung / Flächenschweißung
- 20: Ausgleichsbehälter
- 21: Ausgleichsbehälteroberschale
- 22: Außenfläche (der Ausgleichsbehälteroberschale)
- 23: Einbuchtung (der Ausgleichsbehälteroberschale)
- 24: Ausbuchtung (der Ausgleichsbehälteroberschale)
- 25: Ausgleichsbehälterunterschale
- 26: Ausgleichsbehältervolumen
- 27: Schweißnaht (des Ausgleichsbehälters)
- 28: Folienzuschnitt (des Ausgleichsbehälters)
- 29: Verbindungspunkt (des Ausgleichsbehälters)
- 30: Schwappschutzwand
- 31: Durchgangsöffnung (der Schwappschutzwand)
- 40: Einfüllrohr (des Betriebsflüssigkeitsbehälters)
- 50: Betriebs- und/oder Betankungsentlüftungsventil
- 60: Belüftungseinrichtung / Belüftungsstutzen / Belüftungsventil
- 70: Adsorptionsfilter
- 80: Filtereinrichtung / zweites Adsorptionsfilter / Wabenfilter / Staubfilter
- 90: Fördermodul / Flüssigkeitsfördereinrichtung / Pumpe
- 91: Förderleitung
- 95: Belüftungsröhre
- ATM: Atmosphäre / Umgebung

## Patentansprüche

1. Betriebsflüssigkeitsbehälter (10) für ein Kraftfahrzeug zur Aufnahme einer Betriebsflüssigkeit, wobei der Betriebsflüssigkeitsbehälter (10) einen mit der Atmosphäre (ATM) zumindest mittelbar fluidverbundenen Ausgleichsbehälter (20) aufweist, wobei der Betriebsflüssigkeitsbehälter (10) folgende Merkmale aufweist:
- der Ausgleichsbehälter (20) ist innerhalb des Betriebsflüssigkeitsbehälters (10) derart angeordnet, dass eine Außenfläche (22) einer Ausgleichsbehälteroberschale (21) einer Innenfläche (12) einer Betriebsflüssigkeitsbehälteroberschale (11) gegenüberliegend angeordnet ist;
- bei Überdruck im Betriebsflüssigkeitsbehälter (10) gegenüber der Atmosphäre (ATM) verkleinert sich ein Ausgleichsbehältervolumen (26);
- bei Unterdruck im Betriebsflüssigkeitsbehälter (10) gegenüber der Atmosphäre (ATM) vergrößert sich das Ausgleichsbehältervolumen (26); und
- die der Betriebsflüssigkeitsbehälteroberschale (11) gegenüberliegende Ausgleichsbehälteroberschale (21) ist zumindest abschnittsweise komplementär zur Betriebsflüssigkeitsbehälteroberschale (11) geformt,
wobei der Betriebsflüssigkeitsbehälter (10) **dadurch gekennzeichnet ist,**
- **dass** die Ausgleichsbehälteroberschale (21) und/oder eine Ausgleichsbehälterunterschale (25) eine Barriereschicht aufweist/aufweisen, die für gasförmige Bestandteile der Betriebsflüssigkeit undurchlässig ist; und
- **dass** die Ausgleichsbehälteroberschale (21) und/oder die Ausgleichsbehälterunterschale (25) mehrschichtig aufgebaut ist.

2. Betriebsflüssigkeitsbehälter (10) nach Anspruch 1, **dadurch gekennzeichnet, dass** die Ausgleichsbehälteroberschale (21) in einem komprimierten Zustand des Ausgleichsbehälters (20) zumindest abschnittsweise komplementär zur Betriebsflüssigkeitsbehälteroberschale (11) geformt ist.

3. Betriebsflüssigkeitsbehälter (10) nach einem der vorhergehenden Ansprüche, **dadurch gekennzeichnet, dass** die Ausgleichsbehälteroberschale (21) im expandierten Zustand des Ausgleichsbehälters (20) zumindest abschnittsweise komplementär zur Betriebsflüssigkeitsbehälteroberschale (11) geformt ist.

4. Betriebsflüssigkeitsbehälter (10) nach einem der vorhergehenden Ansprüche, **dadurch gekennzeichnet, dass** die Ausgleichsbehälteroberschale (21) und die Ausgleichsbehälterunterschale (25) unterschiedliche Steifigkeiten aufweisen.

5. Betriebsflüssigkeitsbehälter (10) nach Anspruch 4, **dadurch gekennzeichnet, dass** die Ausgleichsbehälteroberschale (21) eine größere Steifigkeit als die Ausgleichsbehälterunterschale (25) aufweist.

6. Betriebsflüssigkeitsbehälter (10) nach einem der vorhergehenden Ansprüche, **dadurch gekennzeichnet, dass** eine Dicke der Ausgleichsbehälteroberschale (21) größer als eine Dicke einer Ausgleichsbehälterunterschale (25) ist.

7. Betriebsflüssigkeitsbehälter (10) nach einem der vorhergehenden Ansprüche, **dadurch gekennzeichnet, dass** die Ausgleichsbehälteroberschale (21) eine Verstärkungsstruktur zur Erhöhung der Steifigkeit der Ausgleichsbehälteroberschale (21) aufweist.

8. Betriebsflüssigkeitsbehälter (10) nach einem der vorhergehenden Ansprüche, **dadurch gekennzeichnet, dass** der Ausgleichsbehälter (20) lösbar im Betriebsflüssigkeitsbehälterinnenraum (16) befestigt ist.

9. Betriebsflüssigkeitsbehälter (10) nach einem der vorhergehenden Ansprüche, **dadurch gekennzeichnet, dass** der Ausgleichsbehälter (20) punktuell, vorzugsweise über eine Punktschweißung (18) und/oder teilflächig, vorzugsweise über eine teilflächige Verschweißung (18) mit der Betriebsflüssigkeitsbehälteroberschale (11) verbunden ist.

10. Betriebsflüssigkeitsbehälter (10) nach einem der vorhergehenden Ansprüchen, **dadurch gekennzeichnet, dass** die Ausgleichsbehälteroberschale (21) und/oder die Ausgleichsbehälterunterschale (25) eine Barriereschicht aufweist, die sandwichartig zwischen zwei Haftvermittlerschichten angeordnet sind, mit deren Außenseiten jeweils eine Polyethylenschicht stoffschlüssig verbunden ist.

11. Betriebsflüssigkeitsbehälter (10) nach einem der vorhergehenden Ansprüche, **dadurch gekennzeichnet, dass** die Ausgleichsbehälteroberschale (21) mit einer/der Ausgleichsbehälterunterschale (25) mittels einer umlaufenden Verschweißung und/oder einer umlaufenden Verklebung verbunden ist.

12. Betriebsflüssigkeitsbehälter (10) nach einem der vorhergehenden Ansprüche, **gekennzeichnet durch** die folgenden Merkmale:
- der Betriebsflüssigkeitsbehälter (10) weist zumindest eine im Betriebsflüssigkeitsbehälterinnenraum (16) angeordnete Schwappschutzwand (30) auf; und
- der Ausgleichsbehälter (20) ist innerhalb des Betriebsflüssigkeitsbehälterinnenraums (16) an der Schwappschutzwand (30) anliegend angeordnet.

13. Betriebsflüssigkeitsbehälter (10) nach einem der vorhergehenden Ansprüche, **dadurch gekennzeichnet, dass** in Draufsicht auf den Betriebsflüssigkeitsbehälter (10) eine Querschnittsfläche des Ausgleichsbehälters (20) mehr als 30% einer Querschnittsfläche des Betriebsflüssigkeitsbehälters (10) entspricht.

14. Betriebsflüssigkeitsbehälter (10) nach einem der vorhergehenden Ansprüche, **dadurch gekennzeichnet, dass** eine Ausgleichsbehälterunterschale (25) zumindest abschnittsweise komplementär zur Ausgleichsbehälteroberschale (21) geformt ist.

15. Betriebsflüssigkeitsbehälter (10) nach einem der vorhergehenden Ansprüche, **dadurch gekennzeichnet, dass** eine Ausgleichsbehälterunterschale (25) zumindest abschnittsweise komplementär zu einer Betriebsflüssigkeitsbehälterunterschale (15) geformt ist.

## Claims

1. An operating fluid container (10) for a motor vehicle for accommodating an operating fluid, wherein the operating fluid container (10) has a compensation container (20) that is at least indirectly fluidically connected to the atmosphere (ATM), wherein the operating fluid container (10) has the following features:
- the compensation container (20) is situated within the operating fluid container (10) in such a way that an outer surface (22) of a compensation container upper shell (21) is situated opposite from an inner surface (12) of an operating fluid container upper shell (11);
- in the event of positive pressure in the operating fluid container (10) relative to the atmosphere (ATM), a compensation container volume (26) decreases; and
- in the event of negative pressure in the operating fluid container (10) relative to the atmosphere (ATM), the compensating container volume (26) increases;
- the compensation container upper shell (21) opposite from the operating fluid container upper shell (11) has a shape, at least in sections, that is complementary to the operating fluid container upper shell (11),
wherein the operating fluid container (10) is **characterized by** the following features:
- the compensation container upper shell (21) and/or the compensation container lower shell (25) have/has a barrier layer that is impermeable to gaseous components of the operating fluid; and
- the compensation container upper shell (21) and/or the compensation container lower shell (25) have/has a multilayer structure.

2. The operating fluid container (10) according to Claim 1, **characterized in that** in a compressed state of the compensation container (20), the compensation container upper shell (21) has a shape, at least in sections, that is complementary to the operating fluid container upper shell (11).

3. The operating fluid container (10) according to one of the preceding claims, **characterized in that** in the expanded state of the compensation container (20), the compensation container upper shell (21) has a shape, at least in sections, that is complementary to the operating fluid container upper shell (11).

4. The operating fluid container (10) according to one of the preceding claims, **characterized in that** the compensation container upper shell (21) and a compensation container lower shell (25) have different rigidities.

5. The operating fluid container (10) according to Claim 4, **characterized in that** the compensation container upper shell (21) has a greater rigidity than the compensation container lower shell (25).

6. The operating fluid container (10) according to one of the preceding claims, **characterized in that** a thickness of the compensation container upper shell (21) is greater than a thickness of a compensation container lower shell (25).

7. The operating fluid container (10) according to one of the preceding claims, **characterized in that** the compensation container upper shell (21) has a reinforcement structure for increasing the rigidity of the compensation container upper shell (21).

8. The operating fluid container (10) according to one of the preceding claims, **characterized in that** the compensation container (20) is detachably fastened in the operating fluid container interior (16).

9. The operating fluid container (10) according to one of the preceding claims, **characterized in that** the compensation container (20) is joined to the operating fluid container upper shell (11) at certain points, preferably via a spot weld (18), and/or over a partial area, preferably via a partial area weld (18) .

10. The operating fluid container (10) according to Claim 1, **characterized in that** the compensation container upper shell (21) and/or the compensation container lower shell (25) have/has a barrier layer that is sandwiched between two adhesion promoter layers, the outer sides of which are integrally joined to a polyethylene layer in each case.

11. The operating fluid container (10) according to one of the preceding claims, **characterized in that** the compensation container upper shell (21) is joined to a/the compensation container lower shell (25) via a circumferential weld and/or a circumferential adhesive bond.

12. The operating fluid container (10) according to one of the preceding claims, **characterized by** the following features:
- the operating fluid container (10) has at least one splash protection wall (30) situated in the operating fluid container interior (16); and
- the compensation container (20) is situated within the operating fluid container interior (16), resting against the splash protection wall (30).

13. The operating fluid container (10) according to one of the preceding claims, **characterized in that** a cross-sectional area of the compensation container (20), in a top view of the operating fluid container (10), corresponds to more than 30% of a cross-sectional area of the operating fluid container (10).

14. The operating fluid container (10) according to one of the preceding claims, **characterized in that** a compensation container lower shell (25) has a shape, at least in sections, that is complementary to the compensation container upper shell (21).

15. The operating fluid container (10) according to one of the preceding claims, **characterized in that** a compensation container lower shell (25) has a shape, at least in sections, that is complementary to an operating fluid container lower shell (15).

## Revendications

1. Réservoir de fluide de fonctionnement (10) destiné à un véhicule automobile et permettant de recevoir un fluide de fonctionnement, le réservoir de fluide de fonctionnement (10) présentant un réservoir de compensation (20) qui est au moins indirectement en liaison fluidique avec l'atmosphère (ATM), le réservoir de fluide de fonctionnement (10) présentant les caractéristiques suivantes :
- le réservoir de compensation (20) est disposé à l'intérieur du réservoir de fluide de fonctionnement (10) de telle sorte qu'une surface extérieure (22) d'une coque supérieure de réservoir de compensation (21) est disposée en face d'une surface intérieure (12) d'une coque supérieure de réservoir de fluide de fonctionnement (11) ;
- lors d'une surpression dans le réservoir de fluide de fonctionnement (10) par rapport à l'atmosphère (ATM), un volume de réservoir de compensation (26) diminue ;
- lors d'une dépression dans le réservoir de fluide de fonctionnement (10) par rapport à l'atmosphère (ATM), le volume de réservoir de compensation (26) augmente ; et
- la coque supérieure de réservoir de compensation (21) opposée à la coque supérieure de réservoir de fluide de fonctionnement (11) est formée de façon à être complémentaire au moins par sections à la coque supérieure de réservoir de fluide de fonctionnement (11),
le réservoir de fluide de fonctionnement (10) étant **caractérisé en ce**
- **que** la coque supérieure de réservoir de compensation (21) et/ou une coque inférieure de réservoir de compensation (25) présentent une couche barrière qui est imperméable aux constituants gazeux du fluide de fonctionnement ; et
- **que** la coque supérieure de réservoir de compensation (21) et/ou la coque inférieure de réservoir de compensation (25) présentent une structure multicouche.

2. Réservoir de fluide de fonctionnement (10) selon la revendication 1, **caractérisé en ce que** la coque supérieure de réservoir de compensation (21), à l'état comprimé du réservoir de compensation (20), est formée de façon à être complémentaire au moins par sections à la coque supérieure de réservoir de fluide de fonctionnement (11).

3. Réservoir de fluide de fonctionnement (10) selon l'une des revendications précédentes, **caractérisé en ce que** la coque supérieure de réservoir de compensation (21), à l'état dilaté du réservoir de compensation (20), est formée de façon à être complémentaire au moins par sections à la coque supérieure de réservoir de fluide de fonctionnement (11).

4. Réservoir de fluide de fonctionnement (10) selon l'une des revendications précédentes, **caractérisé en ce que** la coque supérieure de réservoir de compensation (21) et la coque inférieure de réservoir de compensation (25) présentent une rigidité différente.

5. Réservoir de fluide de fonctionnement (10) selon la revendication 4, **caractérisé en ce que** la coque supérieure de réservoir de compensation (21) présente une plus grande rigidité que la coque inférieure de réservoir de compensation (25).

6. Réservoir de fluide de fonctionnement (10) selon l'une des revendications précédentes, **caractérisé en ce qu'**une épaisseur de la coque supérieure de réservoir de compensation (21) est supérieure à l'épaisseur d'une coque inférieure de réservoir de compensation (25).

7. Réservoir de fluide de fonctionnement (10) selon l'une des revendications précédentes, **caractérisé en ce que** la coque supérieure de réservoir de compensation (21) présente une structure de renforcement afin d'augmenter la rigidité de la coque supérieure de réservoir de compensation (21).

8. Réservoir de fluide de fonctionnement (10) selon l'une des revendications précédentes, **caractérisé en ce que** le réservoir de compensation (20) est fixé de manière amovible dans l'espace intérieur de réservoir de fluide de fonctionnement (16).

9. Réservoir de fluide de fonctionnement (10) selon l'une des revendications précédentes, **caractérisé en ce que** le réservoir de compensation (20) est relié à la coque supérieure de réservoir de fluide de fonctionnement (11) par points, de préférence par l'intermédiaire d'un soudage par points (18) et/ou de surfaces partielles, de préférence par l'intermédiaire d'un soudage par surface partielle (18).

10. Réservoir de fluide de fonctionnement (10) selon l'une des revendications précédentes, **caractérisé en ce que** la coque supérieure de réservoir de compensation (21) et/ou la coque inférieure de réservoir de compensation (25) présentent une couche barrière, laquelle est disposée à la manière d'un sandwich entre deux couches promotrices d'adhérence dont les côtés extérieurs permettent la liaison de matière de respectivement une couche de polyéthylène.

11. Réservoir de fluide de fonctionnement (10) selon l'une des revendications précédentes, **caractérisé en ce que** la coque supérieure de réservoir de compensation (21) est reliée à une/la coque inférieure de réservoir de compensation (25) au moyen d'un soudage circonférentiel et/ou d'un collage circonférentiel.

12. Réservoir de fluide de fonctionnement (10) selon l'une des revendications précédentes, **caractérisé par** les caractéristiques suivantes :
- le réservoir de fluide de fonctionnement (10) présente au moins une paroi de protection contre le claquement (30) disposée dans l'espace intérieur de réservoir de fluide de fonctionnement (16) ; et
- le réservoir de compensation (20) est disposé à l'intérieur de l'espace intérieur de réservoir de fluide de fonctionnement (16) de façon à reposer contre la paroi de protection contre le claquement (30).

13. Réservoir de fluide de fonctionnement (10) selon l'une des revendications précédentes, **caractérisé en ce que**, en vue de dessus du réservoir de fluide de fonctionnement (10), une section transversale du réservoir de compensation (20) correspond à plus de 30 % d'une surface de section transversale du réservoir de fluide de fonctionnement (10).

14. Réservoir de fluide de fonctionnement (10) selon l'une des revendications précédentes, **caractérisé en ce qu'**une coque inférieure de réservoir de compensation (25) est formée de façon à être complémentaire au moins par sections à la coque supérieure de réservoir de compensation (21).

15. Réservoir de fluide de fonctionnement (10) selon l'une des revendications précédentes, **caractérisé en ce qu'**une coque inférieure de réservoir de compensation (25) est formée de façon à être complémentaire au moins par sections à une coque inférieure de réservoir de fluide de fonctionnement (15).
